# EUROPEAN PATENT APPLICATION

(11) **EP 1 563 951 A1**
(43) Date of publication of application: **17.08.2005**
(21) Application number: 04425602.2
(22) Date of filing: 03.08.2004
(51) Int. Cl.: B23Q 11/00, B23B 49/02, B23Q 1/76

(54) **Anti-vibration sleeve for straight-flute drills**

(30) Priority: 12.02.2004 IT BS20040008 U
(71) Applicant: Cropelli S.r.l., 25036 Palazzolo sull'Oglio (BS) (IT)
(72) Inventor: Cropelli, Tarcisio, 25036 Palazzolo sull'Oglio (BS) (IT)
(74) Representative: Sangiacomo, Fulvia

(57) **Abstract**

The invention concerns an anti-vibration sleeve for straight-flute drills, including a rubber, plastic or similar sleeve body, crossed lengthwise by an opening with a cross-section corresponding to the cross section of the straight-flute drill and which can be coupled to a support bearing. The sleeve body is equipped with a protective metal disk (23) made of steel sheeting or similar, fixed and firmly attached to the end of said body of the sleeve facing towards the cutting point section of said drill and open to contact with hot cutting oil and swarf from drilling.

## Description

### Field of the Invention

This invention concerns the equipment in general for drilling items using straight-flute drills, and refers in particular to a supporting and guide sleeve in one or more intermediate parts of said drills.

### State of the Technique

In the drilling operations of some pieces, the so-called straight-flute drills are used which have an extended body with a proximal end made to engage with a rotation control chuck and a distal end having one or more cutting points or inserted cutting points. The body of a straight-flute drill has a V section and axially forms a hole for possible help of cutting oil in the work zone of the cutting points and, externally, a longitudinal channel for expelling the oil and swarf from the work zone towards the external of the hole being drilled.

These straight-flute drills can be extremely long and if they are not supported even in one or more parts along their length, they may vibrate and affect the efficiency of the drill or even cause breakage of the distal cutting points. The intermediate support of said drills is currently achieved by using anti-vibration sleeves each one having a rubber, plastic or similar body, crossed lengthwise by an opening with a cross section corresponding to the cross section of the straight-flute drill and coupled to a bearing so that it can turn with the drill. The support sleeves configured in this way, even though functional in that they perform an anti-vibration action, they are however not without at least one drawback. In fact, at least the front part of the bush closest to the distal end of the straight-flute drill is always exposed and in contact with the hot cutting oil flowing out of the hole being drilled, and because of this, subject to rapid wear which reduces its efficiency.

### Object and Summary of the Invention

The object of this invention is to remedy this drawback by creating the conditions to shield the front part of an anti-vibration sleeve of the type and for the use in question, in particular the bush closest to the cutting section of a straight-flute drill to be supported and guided.

This objective is achieved according to the invention by an anti-vibration sleeve integrated with a protective metal disk, applied and permanently fixed to its front surface open to contact with the hot cutting oil and swarf from drilling.

The sleeve is thus protected against the main causes of wear, ensuring efficiency and longer life.

### Brief Description of the drawings

More details on the invention are evident in the description that follows made with reference to the attached drawings, which are indicative and not limiting, in which:
Fig. 1 is a view of a straight -flute drill supported by intermediate anti-vibration sleeves;
Fig. 2 is a longitudinal cross-section of the anti-vibration sleeve according to the invention; and
Fig. 3 is a view of the end of the sleeve, from the protected part.

### Detailed Description of the Invention

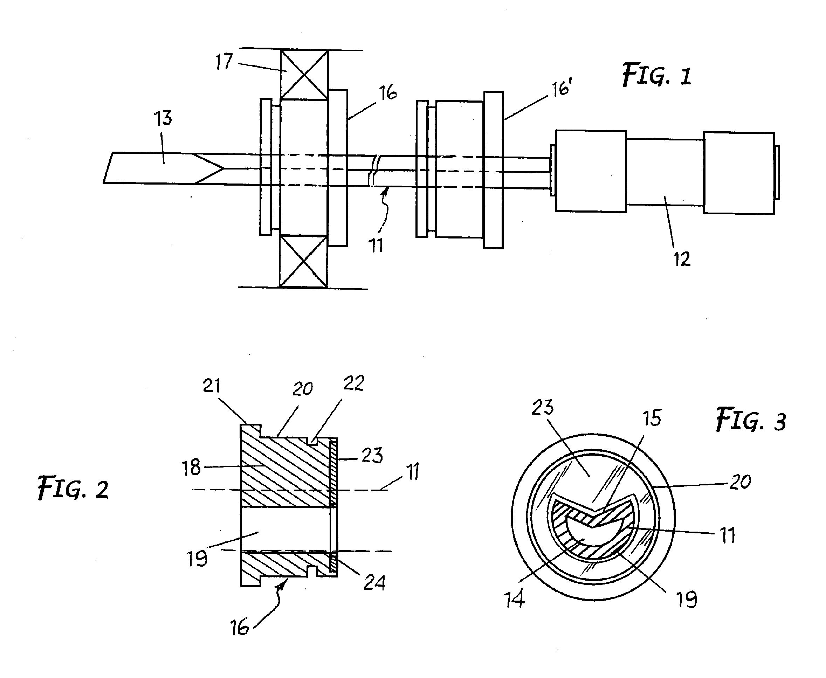

In Fig. 1 there is represented an example of a straight-flute drill which has an elongated body 11 with a largely V cross section and equipped, at its proximal end, with a grip tang 12 for a drill rotation control system and, at its distal end, with at least one cutting point section 13. The drill body 11 is crossed lengthwise by a hole 14 and has, on the outside, a longitudinal channel 15 to expel the cutting oil and swarf.

When operating, a drill such as this is supported and guided along portions of its length by one or more anti-vibration sleeves 16, 16' etc., associated with respective bearings 17 and turning with the drill. Each anti-vibration sleeve is made up of a substantially cylindrical body 18, crossed lengthwise by an opening 19 with a cross section analogous to that of the body 11 of the straight-fluted drill to be supported and having an external housing 20 for a respective bearing 17 packed between a support flange 21 and a groove 22 to hold a ring to hold said bearing in position.

At least the body 18 of an anti-vibration sleeve 16, the one nearest the distal portion of the straight-flute drill, is equipped at its end facing towards the cutting point 13 with a protective disk 23 made of steel sheet or something similar. This protective disk 23 has an opening 24 with the same shape, even if slightly larger, as the opening 19 that crosses the sleeve body 18 lengthwise and has an appropriately machined and finished front surface. The protective disk 23 is flush mounted in said end of the body of the sleeve 18 where it will be firmly fixed using a pressing process and possible interposition of a constraining device.

As mentioned above, the protective metal disk is to shield the sleeve body, which is made of a relatively soft material, from contact with hot oil and in particular from the swarf which flow in the channel of the drill in order to efficiently avoid wear caused by these elements.

## Claims

1. Anti-vibration sleeve for straight-flute drills, including a rubber, plastic or similar sleeve body, crossed lengthwise by an opening with a cross-section corresponding to the cross section of the straight-flute drill and which can be coupled to a support bearing, **characterised by** a protective metal disk (23) fixed and firmly attached to the end of said sleeve body facing towards the cutting point section of said drill and open to contact with hot cutting oil and swarf from drilling.

2. Anti-vibration sleeve according to claim 1, in which said protective disk is made of steel sheeting or similar, equipped with an opening shaped similar to the one crossing the body of the sleeve lengthwise and in which the straight-flute drill passes.

3. Anti-vibration sleeve according to claims 1 and 2 in which said protective disk is flush-mounted and fixed in said end of the body of the bush with or without the interposition of means or constraining substances.
